# EUROPÄISCHE PATENTANMELDUNG

(11) **EP 4 101 602 A1**
(43) Veröffentlichungstag der Anmeldung: **14.12.2022**
(21) Anmeldenummer: 21179079.5
(22) Anmeldetag: 11.06.2021
(51) Int. Cl.: B25J 9/16, G06T 7/00, G06N 3/08, B23Q 17/24, B23B 45/00, B23Q 17/09, G05B 19/4065, B25J 5/00

(54) **VERFAHREN ZUR ANALYSE EINES WERKZEUGS UND MOBILE WERKZEUGMASCHINE**

(71) Anmelder: Hilti Aktiengesellschaft, 9494 Schaan (LI)
(72) Erfinder: Bralla, Dario, 9470 Buchs (CH); Schmid, Florian, 9470 Buchs SG (CH); Khandozhko, Serhey, 9470 Buchs SG (CH); Petousis, Ioannis, 8700 Küsnacht ZH (CH); Bellusci, Giovanni, 9470 Buchs (CH)
(74) Vertreter: Hilti Aktiengesellschaft Corporate Intellectual Property

(57) **Zusammenfassung**

Die Erfindung betrifft ein Verfahren zur Nutzung eines Werkzeugs (100), beispielsweise ein Bohrwerkzeug, ein Meißelwerkzeug oder ein Schleifwerkzeug, mit einer mobilen Werkzeugmaschine (10). Sie ist dadurch gekennzeichnet, dass die mobile Werkzeugmaschine (10) wenigstens eine Eigenschaft des Werkzeugs (100) bestimmt. Des Weiteren betrifft die Erfindung eine mobile Werkzeugmaschine (10). Die Erfindung ermöglicht es durch rechtzeitige Identifikation von auszutauschenden Werkzeugen (100), Bauaufgaben dauerhaft mit hoher Produktivität auszuführen.

## Beschreibung

Die Erfindung betrifft ein Verfahren zur Nutzung eines Werkzeugs mit einer mobilen Werkzeugmaschine. Des Weiteren betrifft die Erfindung eine mobile Werkzeugmaschine, die eingerichtet ist, ein Werkzeug, beispielsweise ein Bohrwerkzeug oder ein Meißelwerkzeug, aufzunehmen.

Auf Baustellen verwendete Werkzeuge unterliegen häufig einem starken Verschleiß. Verschlissene Werkzeuge können die Produktivität von Arbeiten auf Baustellen erheblich reduzieren. Bereits kleinere Schädigungen, bei einem Gesteinsbohrer beispielsweise im Bereich von Hartmetallschneiden, können zu erheblich längeren Bohrzeiten oder gar zu einem Totalausfall des Werkzeugs und entsprechenden zeitlichen und finanziellen Kosten führen.

Aufgabe der vorliegenden Erfindung ist es daher, ein Verfahren sowie eine mobile Werkzeugmaschine anzubieten, die Arbeiten auf Baustellen unter Nutzung eines Werkzeugs mit besonders hoher Produktivität ermöglichen.

Gelöst wird die Aufgabe durch ein **Verfahren zur Nutzung eines Werkzeugs** mit einer mobilen Werkzeugmaschine, wobei die mobile Werkzeugmaschine wenigstens eine Eigenschaft des Werkzeugs bestimmt.

Der Erfindung liegt dabei der Gedanke zugrunde, eine Eigenschaft des Werkzeugs, insbesondere eine veränderliche Eigenschaft, zu überwachen. Je nach Ausprägung der Eigenschaft kann dann das Werkzeug weiterverwendet, ausgetauscht, repariert und / oder gewartet, beispielsweise gereinigt, werden, um somit eine möglichst hohe Produktivität über eine möglichst lange Zeitdauer hinweg gewährleisten zu können. Auch ist denkbar, die Verwendung des Werkzeugs in Abhängigkeit von der bestimmten Eigenschaft zu steuern. Dazu kann beispielsweise eine Drehzahl und / oder eine Schlagenergie oder dergleichen der mobilen Werkzeugmaschine gesteuert werden.

Das Werkzeug kann beispielsweise ein Bohrwerkzeug, ein Meißelwerkzeug, ein Schleifwerkzeug, ein Sägewerkzeug oder dergleichen sein. Das Werkzeug kann zur Bearbeitung von Gestein, beispielsweise von Beton oder Ziegelstein, eingerichtet sein.

Besonders vorteilhaft kann das Verfahren bei einem schlagenden Werkzeug, beispielsweise einem Meißelwerkzeug und / oder einem Hammerbohrwerkzeug, verwendet werden. Desgleichen kann das Verfahren bevorzugt mit mobilen Werkzeugmaschinen genutzt werden, die einen schlagenden Betrieb, beispielsweise einen Meißelbetrieb und / oder einen Hammerbohrbetrieb, ermöglichen. Ganz besonders bevorzugt kann das Verfahren mit einem Hammerbohrwerkzeug und / oder mit einer mobilen Hammerbohrmaschine verwendet werden.

Die Eigenschaft kann insbesondere ein Verschleißmaß sein. Die Eigenschaft kann eine Form und / oder eine Größe, insbesondere eine Länge und / oder ein Durchmesser, des Werkzeugs sein. Die Eigenschaft kann auch ein Werkzeugtyp sein.

Die Messung kann auch in Form einer Klassifikation erfolgen. Die Eigenschaft kann beispielsweise wenigstens eine Klassifikation als Bohrwerkzeug, Meißelwerkzeug, Schleifwerkzeug, oder dergleichen umfassen. Bevorzugt können auch mehrere, insbesondere unterschiedliche, veränderliche und / oder unveränderliche Eigenschaften des Werkzeugs bestimmt werden. Beispielsweise kann vorgesehen sein, einen Typ des Werkzeugs und ein Verschleißmaß des Werkzeugs zu bestimmen.

Bei bevorzugten Varianten des Verfahrens kann zur Bestimmung der Eigenschaft ein Bild des Werkzeugs durch eine Bildaufnahmeeinheit aufgenommen werden.

Insbesondere kann ein Bild eines Arbeitsabschnitts des Werkzeugs aufgenommen werden. Der Arbeitsabschnitt kann beispielsweise ein Werkzeugkopf sein. Der Arbeitsabschnitt kann sich auf einer Stirnseite des Werkzeugs befinden. Eine Aufnahme der Stirnseite kann somit ein Bild eines Werkzeugkopfes des Werkzeugs liefern.

Das Bild kann zweidimensional sein. Es kann auch dreidimensional sein. Dazu kann die Bildaufnahmeeinheit als 3D-Bildaufnahmeeinheit ausgebildet sein. Alternativ oder ergänzend können mehrere Bilder, insbesondere aus unterschiedlichen Perspektiven, aufgenommen werden. Dann kann ein dreidimensionales Bild aus den mehreren Bildern bestimmt werden.

Das Bild kann telezentrisch aufgenommen werden. Insbesondere kann die Aufnahme des Bildes entlang einer Längsachse des Werkzeugs erfolgen, sodass das aufgenommene Bild besonders robust, insbesondere nicht oder kaum anfällig gegenüber Verschmutzungen wie beispielsweise Staub, auswertbar sein kann. Die telezentrische Aufnahme ist auch vorteilhaft, wenn ein Durchmesser des Werkzeugs bestimmt werden soll.

Die Robustheit der Auswertung lässt sich weiter verbessern, indem das Bild in einer Messkammer aufgenommen wird. Insbesondere kann die Aufnahme des Bildes vor einem standardisierten Hintergrund, mit standardisierten Beleuchtungsverhältnisse und / oder mit einem hohen Kontrast erfolgen.

Untersuchungen haben gezeigt, dass das Bild bevorzugt mit einer Blendenzahl von wenigstens 5, besonders vorzugsweise von wenigstens 11, aufgenommen werden kann, um eine möglichst gute Tiefenschärfe zu gewährleisten.

Denkbar ist auch eine Aufnahme mit einer geringeren Blendenzahl, beispielsweise 2,8. In diesem Fall sollte die zu bestimmende Eigenschaft sich auf einen, insbesondere im Hinblick auf seine Tiefe, eng abgegrenzten Abschnitt des Werkzeugs, beispielsweise auf wenigstens eine Schneide anstelle des gesamten Werkzeugkopfes, beziehen.

Die Bildaufnahmeeinheit kann als Kamera ausgebildet sein. Auf kostengünstige Weise lässt sich eine hohe Auflösung erzielen, wenn die Bildaufnahmeeinheit ausgebildet ist, ein Intensitätsbild aufzunehmen. Dazu kann sie beispielsweise als Schwarz-Weiß-Kamera ausgebildet sein.

Denkbar ist auch, dass die Bildaufnahmeeinheit ausgebildet ist, ein Infrarotbild aufzunehmen. Durch Aufzeichnung eines Infrarotbildes können lokale Temperaturen und / oder lokale Temperaturunterschiede bestimmt werden. Aus den lokalen Temperaturen und / oder Temperaturunterschieden können dann, beispielsweise nach einem Einsatz des Werkzeugs, Stellen erhöhter Belastung bestimmbar sein. Lokale Temperaturunterschiede können sich beispielsweise während der Benutzung des Werkzeugs bilden. Sie können somit mit lokalen Beanspruchungen des Werkzeugs, insbesondere einzelner Bereiche des Werkzeugs, korrelieren. Denkbar ist somit auch, mithilfe des Infrarotbildes das Verschleißmaß des Werkzeugs zu bestimmen.

Das Werkzeug und / oder die Messkammer können, insbesondere während der Aufnahme, beleuchtet werden. Die Beleuchtung kann monochromatisch oder zumindest im Wesentlichen einfarbig sein. Zur gleichmäßigen Ausleuchtung ist es denkbar, einen Diffusor zu verwenden.

Das Verfahren kann auch umfassen, dass die Position des Werkzeugs gemessen wird. Dazu kann die Messkammer eine Werkzeugpositionsmesseinheit aufweisen. Die Messung der Position kann induktiv und/oder mittels einer Lichtschranke erfolgen.

Bei bevorzugten Varianten des Verfahrens wird die Bildaufnahmeeinheit kalibriert. Beispielsweise wird eine Pose der Bildaufnahmeeinheit ermittelt. Vorzugsweise kann die Bildaufnahmeeinheit mit Genauigkeiten von 1 mm oder weniger, beispielsweise ca. 0,1 mm, kalibriert werden. Zur Kalibrierung kann ein Kalibrierungsmuster, beispielsweise ein Schachbrettmuster, von der Bildaufnahmeeinheit aufgenommen werden. Dies ermöglicht eine besonders kosteneffiziente Kalibrierung. Mögliche Temperatureffekte lassen sich zudem berücksichtigen.

Alternativ oder ergänzend zur Kalibrierung kann zur Auswertung des aufgenommen Bildes eine trainierbare Bildauswertungseinheit verwendet werden. Die trainierbare Bildauswertungseinheit kann dann mit einer Vielzahl von Bildern von Werkzeugen trainiert werden.

Die Messgenauigkeit lässt sich weiter steigern, wenn das aufgenommene Bild fehlerkorrigiert wird. Insbesondere können Linsenfehler, Aberrationen, oder dergleichen korrigiert werden. Zur Korrektur kann ein Brown-Conrady-Modell verwendet werden. Alternativ oder ergänzend kann auch ein Abbildungsmaßstab ermittelt werden. Es kann insbesondere das Verhältnis von Pixeln des Bildes pro Strecke, beispielsweise eine Anzahl Pixel pro mm, ermittelt werden.

Oftmals weist das Werkzeug wenigstens einen Statusindikator, beispielsweise einen Verschleißindikator, auf. Der Statusindikator kann beispielsweise am Werkzeugkopf oder seitlich entlang des Werkzeugs ausgebildet sein. Dann kann bei Varianten des Verfahrens vorgesehen sein, ein Bild des Statusindikators aufzunehmen. Auch durch Auswertung eines solchen Bildes kann beispielsweise das Verschleißmaß des Werkzeugs bestimmt werden. Vorzugsweise sollte das Werkzeug oder zumindest der Statusindikator vor Aufnahme des Bildes gereinigt, insbesondere von Staub befreit, werden.

Alternativ oder ergänzend kann bei Varianten des Verfahrens vorgesehen sein, dass zur Bestimmung der Eigenschaft ein Arbeitsparameter während eines Arbeitsbetriebs der mobilen Werkzeugmaschine gemessen wird. Im Falle eines Bohrwerkzeugs und / oder einer Bohrmaschine kann der Arbeitsparameter beispielsweise ein Bohrfortschritt, eine Bohrgeschwindigkeit, Bohrdauer oder dergleichen sein. Der Arbeitsparameter kann auch einem Betriebsmodus entsprechen, z. B. einem Schlagbetrieb, einem Bohrbetrieb oder einem Bohr-Schlag-Betrieb.

Zur Bestimmung der Eigenschaft kann ein trainierbarer Filter verwendet wird. Der trainierbare Filter kann insbesondere ein neuronales Netz, beispielsweise eine Deep Learning-Einheit, eine Support Vector Machine oder dergleichen umfassen.

Um als Eigenschaft das Verschleißeigenschaft zu bestimmen, kann der trainierbare Filter mit Daten von voll funktionsfähigen, abgenutzten und beschädigten Werkzeugen trainiert werden. Das Training kann mit Einzelbilddaten erfolgen. Bevorzugt kann auch mit Videodaten trainiert werden. Die Videodaten können beispielsweise sich drehende Werkzeuge zeigen.

Besonders bevorzugt wird lässt sich das Verfahren verwenden, indem die Eigenschaft des Werkzeugs auf einer Baustelle, insbesondere auf einer Hochbau-Baustelle, einer Tiefbau-Baustelle und / oder einer Vorfertigungs-Baustelle, bestimmt wird. Eine Vorfertigungs-Baustelle kann dazu einem Arbeitsbereich im Freien und / oder in einem Gebäude entsprechen, an dem ein Bauelement zum Einsatz in oder an einem Bauwerk, beispielsweise ein Fertigbauteil, insbesondere ein Wand-, Boden- oder Deckenelement, hergestellt wird.

In den Rahmen der Erfindung fällt des Weiteren **eine mobile Werkzeugmaschine,** beispielsweise eine Handwerkzeugmaschine oder ein Bauroboter, die eingerichtet ist, ein Werkzeug, beispielsweise ein Bohrwerkzeug, ein Meißelwerkzeug oder ein Schleifwerkzeug, aufzunehmen, wobei die mobile Werkzeugmaschine eingerichtet ist, wenigstens eine Eigenschaft des in ihr aufgenommenen Werkzeugs zu bestimmen. "in ihr aufgenommen" kann dabei auch bedeuten, dass das Werkzeug in einem mit der mobilen Werkzeugmaschine zusammenwirkenden Werkzeugspeicher aufgenommen ist. Es kann auch umfassen, dass das Werkzeug in einer Werkzeugaufnahme der mobilen Werkzeugmaschine aufgenommen ist.

Besonders bevorzugt ist dabei, wenn die mobile Werkzeugmaschine ein Bauroboter ist und / oder einen solchen umfasst. Der Bauroboter kann zur autonomen oder zumindest teilautonomen Ausführung von Bauarbeiten eingerichtet sein. Es kann sich beispielsweise um einen Bohrbauroboter, einen Meißelbauroboter und / oder einen Schleifbauroboter handeln. Alternativ kann die mobile Werkzeugmaschine auch eine Handwerkzeugmaschine, beispielsweise eine Handbohrmaschine, eine Bohrhammermaschine, eine tragbare Meißelmaschine oder dergleichen sein.

Insbesondere bei einem hohen Autonomiegrad des Bauroboters ist es günstig, wenn der Bauroboter selbsttätig die Eigenschaft des Werkzeugs, beispielsweise das Verschleißmaß, bestimmen kann. So kann es beispielsweise bei Bohrarbeiten in stahlbewehrten Betonbauteilen zu einem Bruch eines Bohrwerkzeugs kommen. Die erfindungsgemäße mobile Werkzeugmaschine, insbesondere in Form des Bohrbauroboters, ist somit in der Lage, das verwendete Werkzeug wiederholt zu prüfen und im Falle einer starken Abnutzung und / oder bei Beschädigung des Werkzeugs geplante Bauarbeiten, im vorliegenden Beispiel geplante Bohrarbeiten, zu unterbrechen, das Werkzeug auszutauschen und / oder eine Benutzerinteraktion von einem Benutzer der mobilen Werkzeugmaschine anzuregen.

Bei einer Klasse von Ausführungsformen kann die mobile Werkzeugmaschine zur Detektion eines Typs und / oder eines Verschleißmaßes des aufgenommenen Werkzeugs eingerichtet sein.

Sie kann auch zur Messung eines Arbeitsparameters eingerichtet sein.

Besonders bevorzugt weist die mobile Werkzeugmaschine einen Beschleunigungssensor auf.

Der Beschleunigungssensor kann dazu an einem Motor und / oder an einem Getriebe der mobilen Werkzeugmaschine angeordnet sein. Er kann somit eingerichtet sein, Beschleunigungen und / oder Vibrationen des Motors und / oder des Getriebes zu erfassen.

Die mobile Werkzeugmaschine kann bevorzugt eingerichtet sein, in Abhängigkeit der bestimmten Eigenschaft ein Signal an einen Benutzer, insbesondere direkt und / oder indirekt, auszugeben. Beispielsweise kann das Signal einen Verschleißgrad indizieren und / oder den Benutzer zu einer Benutzerinteraktion auffordern. So kann der Benutzer auf ein abgenutztes Werkzeug hingewiesen werden. Er kann dann beispielsweise aufgefordert sein, anzugeben, ob anstehende Bauarbeiten unterbrochen werden sollen und / oder ob das Werkzeug ausgetauscht werden soll. Alternativ oder ergänzend kann die mobile Werkzeugmaschine eingerichtet sein, bis zur Behebung eines Mangels am oder des Werkzeugs, beispielsweise im Falle eines abgenutzten oder beschädigten Werkzeugs, die Bauarbeit zu unterbrechen.

Besonders bevorzugt kann die mobile Werkzeugmaschine wenigstens eine Bildaufnahmeeinheit aufweisen. Die Bildaufnahmeeinheit kann eingerichtet sein, ein Bild des Werkzeugs aufzunehmen. Sie kann ein oder mehrere der vorangehend im Zusammenhang mit dem Verfahren beschriebenen Eigenschaften aufweisen. So kann sie beispielsweise zur Aufnahme eines Intensitätsbildes, beispielsweise in Form eines Schwarz-weiß-Bildes, und / oder eines Farbbildes eingerichtet sein.

Die mobile Werkzeugmaschine kann besonders bevorzugt eingerichtet sein, die zu bestimmende Eigenschaft des Werkzeugs anhand des aufgenommenen Bildes zu bestimmen.

Die mobile Werkzeugmaschine kann insbesondere eine Messkammer aufweisen. In die Messkammer kann das Werkzeug zur Bestimmung der Eigenschaft zumindest teilweise aufnehmbar sein.

Die mobile Werkzeugmaschine kann ferner eingerichtet ist, je nach detektiertem Typ und / oder je nach detektiertem Zustand einen ihrer Betriebsparameter, beispielsweise eine Drehzahl und / oder eine Schlagenergie, selbsttätig einzustellen.

Besonders flexibel einsetzbare Ausführungsformen der Erfindung können zum Einsatz unterschiedlicher Werkzeugarten eingerichtet sein. Beispielsweise kann die mobile Werkzeugmaschine zum Betrieb mit wenigstens zwei verschiedenen Werkzeugen aus der Gruppe von Bohrwerkzeugen, Meißelwerkzeugen, Schleifwerkzeugen und Messwerkzeugen eingerichtet sein.

Weist die mobile Werkzeugmaschine einen Werkzeugwechsler auf, so kann sie eingerichtet sein, selbsttätig ein zu verwendendes Werkzeug auszuwählen und / oder auszutauschen.

Besonders bevorzugt kann die mobile Werkzeugmaschine eine Werkzeugreinigungsvorrichtung aufweisen. Die Werkzeugreinigungsvorrichtung kann insbesondere zur Entfernung von Schmutz, beispielsweise Staub, eingerichtet sein. Somit kann das Werkzeug nach Gebrauch selbsttätig gereinigt werden. Durch Messung der zu messenden Eigenschaft nach Reinigung des Werkzeugs lässt sich auch die Messgenauigkeit steigern.

Bevorzugt kann die mobile Werkzeugmaschine ein Bauroboter, insbesondere ein Bohrbauroboter, sein.

Die mobile Werkzeugmaschine kann eingerichtet sein, die Eigenschaft des Werkzeugs nach dem vorangehend beschriebenen Verfahren zu bestimmen.

In den Rahmen der Erfindung fällt auch eine mobile Werkzeugmaschine, beispielsweise eine Handwerkzeugmaschine oder ein Bauroboter, die eingerichtet ist, ein Werkzeug, beispielsweise ein Bohrwerkzeug oder ein Meißelwerkzeug, aufzunehmen, wobei die mobile Werkzeugmaschine eingerichtet ist, wenigstens eine Eigenschaft des in ihr aufgenommenen Werkzeugs nach dem vorangehend beschriebenen Verfahren zu bestimmen.

Die mobile Werkzeugmaschine kann dazu auch eine oder mehrere der Eigenschaften der vorangehend beschriebenen mobilen Werkzeugmaschinen aufweisen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1: einen Bauroboter in schematischer Darstellung;
- Fig. 2: eine perspektivische Schnittansicht einer Messkammer;
- Fig. 3: eine perspektivisch Schnittansicht auf eine Messkammer während einer Kalibrierung;
- Fig. 4 bis 6: Bilder von Werkzeugen unterschiedlichen Verschleißgrades und
- Fig. 7: ein Bild eines Kalibrierungsmuster.

In der nachfolgenden Beschreibung der Figuren werden zur Erleichterung des Verständnisses der Erfindung für gleiche oder sich funktional entsprechende Elemente jeweils die gleichen Bezugszeichen verwendet.

Die Erfindung wird am Beispiel einer als Bohrbauroboter ausgebildeten mobilen Werkzeugmaschine näher erläutert.

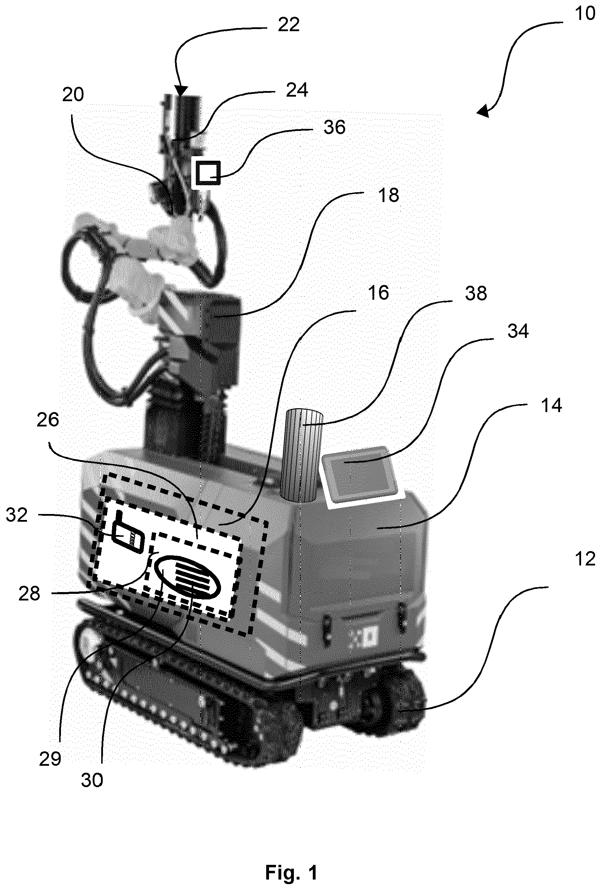

**Fig. 1** zeigt einen Bohrbauroboter **10** mit einem als Kettenfahrwerk ausgebildeten Fahrwerk **12,** einem in einem Gehäuse **14** ausgebildeten Steuerraum **16** und einem oberseitig des Gehäuses 14 angeordneten Manipulator **18.** Der Manipulator 18 ist als multiaxial steuerbarer Arm ausgebildet, an dessen freien Ende ein Endeffektor **20** mit einer daran angeordneten Bohrwerkzeugmaschine **22** und vorzugsweise einer Staubabsaugungsvorrichtung **24** angeordnet ist.

Der Bohrbauroboter 10 ist zur Ausführung von Bauaufgaben, insbesondere von Bohrarbeiten in Decken und Wänden, auf einer Baustelle, beispielsweise auf einer Hochbaubaustelle, ausgebildet. Neben dem Manipulator 18 zur Ausführung der dem Bohrbauroboter 10 zugeordneten Bauaufgaben, weist er eine innerhalb des Gehäuses 14, insbesondere im Steuerraum 16, angeordnete Rechnereinheit **26** auf. Die Rechnereinheit 26 umfasst eine Speichereinheit **28.**

Die Rechnereinheit 26 ist mit ausführbarem Programmcode ausgestattet, sodass mittels der Rechnereinheit 26 ein internes Bauaufgabenverwaltungssystem **29** mit einer internen Bauaufgabenliste **30,** die ein oder mehrere vom Bohrbauroboter 10 auf der Baustelle auszuführende Bauaufgaben umfasst, ausgebildet ist. Die interne Bauaufgabenliste 30 ist dazu in der Speichereinheit 28 abrufbar gespeichert.

Mit Hilfe des Programmcodes ist zudem auf der Rechnereinheit 26 ist eine Deep Learning - Einheit in Form eines neuronalen Netzes ausgebildet. Die Deep Learning-Einheit wird - wie weiter unten näher erläutert zur Bestimmung einer oder mehrerer Eigenschaften eines Werkzeugs aus Aufnahmen von Bildern zunächst trainiert und danach verwendet.

Die Rechnereinheit 26 und damit der Bohrbauroboter 10 weisen ferner eine Kommunikationsschnittstelle **32** zur Kommunikation mit einem externen Bauaufgabenverwaltungssystem auf, wobei das externe Bauaufgabenverwaltungssystem eingerichtet ist, eine externe Bauaufgabenliste abrufbar zu speichern, wobei die externe Bauaufgabenliste ein oder mehrere auf der Baustelle auszuführende Bauaufgaben umfasst, wobei der Bohrbauroboter 10 eingerichtet ist, über die Kommunikationsschnittstelle 32 wenigstens eine Bauaufgabe und / oder einen Bauaufgabenzustand einer Bauaufgabe der internen Bauaufgabenliste 30 an das externe Bauaufgabenverwaltungssystem zu senden.

Die Kommunikationsschnittstelle **32** weist eine Mobilfunkschnittstelle nach dem 4G- oder dem 5G-Standard, eine WLAN-Schnittstelle, eine Bluetooth-Schnittstelle als auch eine USB-Schnittstelle zur Datenübertragung mittels tragbarer USB-Speichereinheiten, auf.

Da die Rechnereinheit 26, die Speichereinheit 28, das interne Bauaufgabenverwaltungssystem 29, die interne Bauaufgabenliste 30 sowie die Kommunikationsschnittstelle 32 im Steuerraum 16 und damit innerhalb des Gehäuses 14 angeordnet sind, sind diese einschließlich dem Steuerraum 16 in Fig. 1 sowie schematisch dargestellt.

Weiter weist der Bohrbauroboter 10 eine Anzeigeeinheit **34** auf, die als Touchscreen ausgebildet ist. Die Anzeigeeinheit 34 bildet somit zugleich eine Eingabeeinheit zur manuellen Dateneingabe durch einen Benutzer des Bauroboters 10. Insbesondere ist die Anzeigeeinheit 34 in Verbindung mit der Rechnereinheit 26 und dem internen Bauaufgabenverwaltungssystem **29** eingerichtet, die in der internen Bauaufgabenliste 30 enthaltenen Bauaufgaben einschließlich der den Bauaufgaben zugeordneten Bauaufgabenzuständen grafisch anzuzeigen.

Dazu ist die Anzeigeeinheit 34 eingerichtet, die Baustelle oder zumindest einen relevanten Teil der Baustelle schematisch darzustellen und die von dem Bohrbauroboter 10 auszuführenden Bauaufgaben, hier Bohrungen, entsprechend der räumlichen Anordnung der Bauaufgaben grafisch in Form von entsprechend positionierten Kreisen darzustellen. Je nach dem zugehörigen Bauaufgabenzustand, in diesem Fall je nach dem jeweiligen Erledigungsgrad, werden die Kreise unterschiedlich farblich gefüllt dargestellt. Die Bauaufgaben sowie die jeweils zugeordneten Bauaufgabenzustände können zudem durch den Benutzer manuell geändert werden.

Eine Positionsdetektionseinheit **36** zur Bestimmung der Position und der Lage des Manipulators 18 und damit des Bauroboters 10 ist am Endeffektor 20 ausgebildet.

Der Bohrbauroboter 10 ist ferner eingerichtet, die mittels der Positionsdetektionseinheit 36 bestimmte Position und Lage seines Manipulators 18 über die Kommunikationsschnittstelle 32 zu senden und entsprechende Positions- und Lagedaten anderer Bohrbauroboter zu empfangen.

Der Bohrbauroboter 10 weist ferner eine, in Fig. 1 schematisch dargestellte, Messkammer **38** auf.

Die Messkammer 38 ist eingerichtet zur Aufnahme eines Werkzeugs, hier eines von der Bohrwerkzeugmaschine 22 zu verwendenden Bohrwerkzeugs, von dem wenigstens eine Eigenschaft zu bestimmen ist. Die Messkammer 38 ist derart eingerichtet, dass das Bohrwerkzeug mithilfe des Manipulators 18 und dessen Endeffektors 20 zur Messung in die Messkammer 38 eingeführt werden kann.

Der Bohrbauroboter 10, insbesondere dessen Rechnereinheit 26 und hier besonders der Programmcode, ist dabei eingerichtet, vor Beginn einer Bauaufgabe oder zumindest vor Beginn einer Serie von Bauaufgaben einen Typ des Bohrwerkzeugs, eine Größe des Bohrwerkzeugs und dessen Verschleißzustand mithilfe der Messkammer 38 zu bestimmen. Alternativ oder ergänzend kann der Bohrbauroboter 10 auch eingerichtet sein, während oder nach der Ausführung einer Bauaufgabe, also während des Bohrens, das verwendete Bohrwerkzeug mithilfe der Messkammer 38 zu prüfen. Denkbar ist insbesondere, das Bohrwerkzeug zu prüfen, sobald der Bohrbauroboter 10 beispielsweise eine zu geringe Bohrfortschrittsgeschwindigkeit feststellt.

Insbesondere ist der Bohrbauroboter 10 eingerichtet zu prüfen, ob das für die jeweilige Bauaufgabe benötigte, korrekte Bohrwerkzeug vorliegt. Ferner ist er eingerichtet zu prüfen, dass sich das Bohrwerkzeug in einem einsatzfähigen Zustand befindet und dazu insbesondere weder schwerwiegend beschädigt noch zu sehr abgenutzt ist. Insbesondere wird geprüft, ob sich das Bohrwerkzeug, insbesondere dessen Schneiden, innerhalb zulässiger Toleranzbereiche bewegt.

Der Bohrbauroboter 10 kann einen Werkzeugspeicher mit mehreren geeigneten Ersatzbohrwerkzeugen enthalten, sodass der Bohrbauroboter 10 das Bohrwerkzeug im Falle einer Beschädigung oder eines zu weitreichenden Verschleißes und / oder im Falle der Ungeeignetheit für die jeweilige Bauaufgabe durch ein Ersatzbohrwerkzeug selbsttätig austauschen kann.

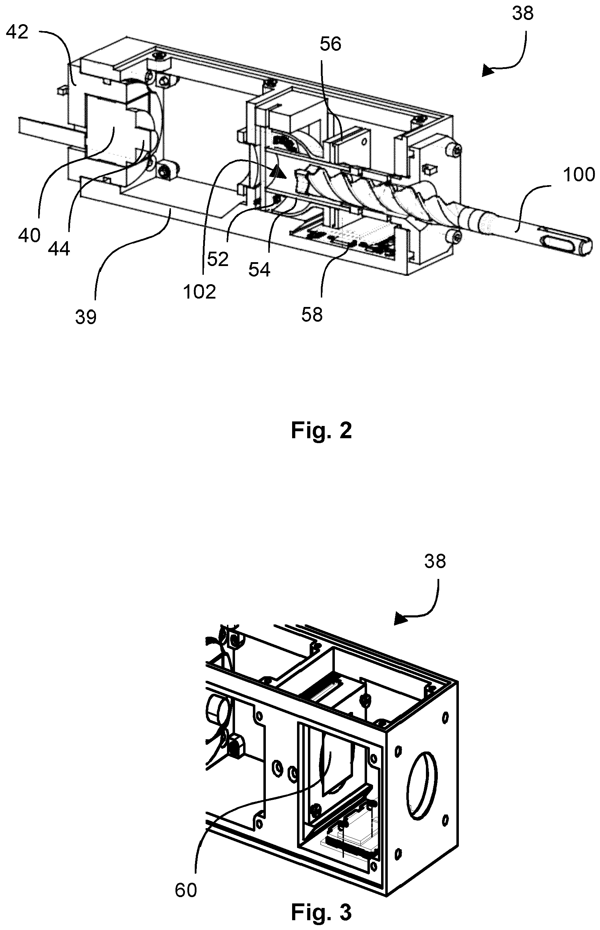

**Fig. 2** zeigt eine schematische, perspektivische Schnittansicht der Messkammer 38, in die ein Bohrwerkzeug **100** mit seinem Werkzeugkopf **102** zur Messung eingeführt ist. Die Messkammer 38 weist ein Gehäuse **39** auf.

Die Messkammer 38 weist ferner eine Bildaufnahmeeinheit in Form einer Messkamera **40** auf. Die Messkamera 40 ist als Schwarzweiß-Kamera ausgebildet. Sie weist eine Auflösung von mindestens 3 MP, bevorzugt von mindestens 5 MP, auf. Zur Aufnahme von Bildsequenzen, insbesondere Videos, weist sie eine Bildaufnahmerate von mindestens 5, bevorzugt von mindestens 7, Bildern pro Sekunde auf. Die Messkamera 40 wird von einem Kamerahalter **42** gehalten.

Im Strahlengang vor der Messkamera 40 ist ein Objektiv **44** mit Brennzahl 11 angeordnet. Zur Feinjustierung der Position der Messkamera 40 kann die Position des Kamerahalters 42 mittels Abstandselementen relativ zum Gehäuse 39 feinjustiert werden.

Ein Linsenhalter **46** fixiert weiter eine, insbesondere plan-konvexe, Linse **48** im Strahlengang vor der Messkamera 40. Die Linse 48 weist eine effektive Brennweite von 75 mm auf.

Im weiteren Verlauf des Strahlengangs befindet sich ein Schutzglas **50,** insbesondere mit einer Dicke von ca. 3 mm, durch das der Werkzeugkopf 102 des Bohrwerkzeugs 100 von der Messkamera 40 aus sichtbar ist.

Insbesondere kann die Messkamera 40 somit ein Bild einer Frontansicht des Werkzeugkopfes 102 aufnehmen.

Der Werkzeugkopf 102 lässt sich mittels einer, vorzugsweise ringförmigen, Beleuchtungseinrichtung **52** beleuchten. Die Beleuchtungseinrichtung 52 ist mit einer Vielzahl von LED ausgestattet. Sie ist zur Erzeugung monochromatischen oder zumindest im Wesentlichen einfarbigen Lichtes, beispielsweise grünen Lichtes, eingerichtet, sodass Linsenfehler wie beispielsweise chromatische Aberrationen nur geringe Auswirkungen auf das aufgenommene Bild haben. Um eine möglichst gleichmäßige Ausleuchtung zu erzielen und beispielsweise um Glanzpunkte auf dem Werkzeugkopf 102 zu vermeiden, kann die Beleuchtungseinrichtung mit einem oder mehreren Diffusoren ausgestattet sein. Die Beleuchtungseinrichtung 52 weist des Weiteren eine Beleuchtungskuppel auf, um eine möglichst homogene Ausleuchtung aus einem großen Raumwinkel zu erreichen. Dazu kann die Beleuchtungskuppel aus einem mattweißem Material ausgebildet sein.

Damit das von der Beleuchtungseinrichtung 52 erzeugte Licht den Werkzeugkopf 102 erreichen kann, ist ein Trennrohr **54,** in dem das Bohrwerkzeug 100 mit seinem Werkzeugkopf 102 angeordnet ist, transparent ausgebildet. Beispielsweise kann es aus einem transparenten Kunststoff ausgebildet sein.

Eine Lichtschranke **56** ist im Bereich des Trennrohrs 54 angeordnet, sodass detektierbar ist, ob das Bohrwerkzeug 100 in die Messkammer 38 eingeführt ist und insbesondere ob es hinreichend weit in das Trennrohr 54 hinein eingeführt ist.

Innerhalb des Gehäuses 39 kann des Weiteren eine Vorverarbeitungselektronik **58,** insbesondere mit einer Schnittstellenelektronik zur Kommunikation mit der Rechnereinheit 26 (siehe Fig. 1) angeordnet sein.

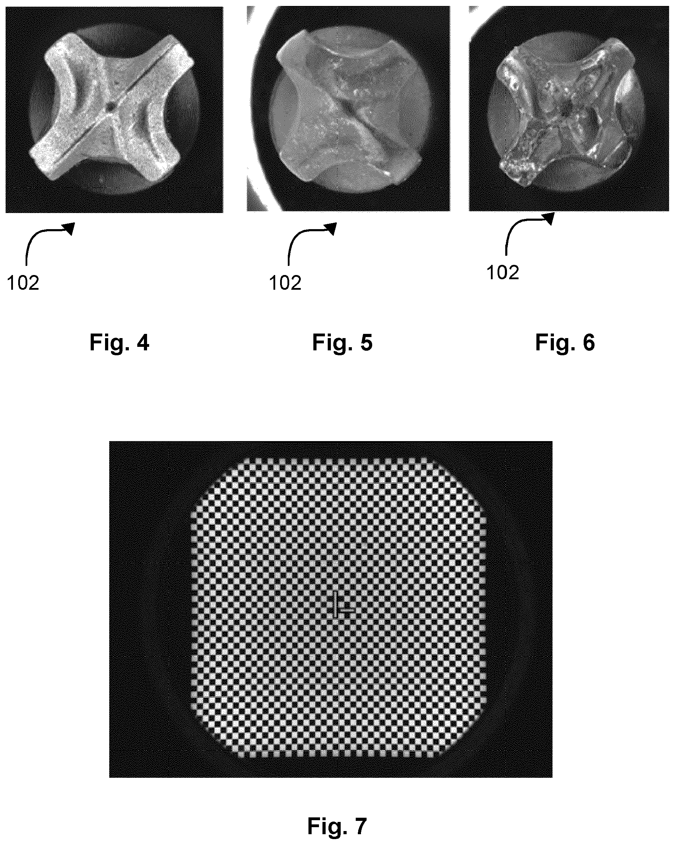

**Fig. 3** zeigt eine Ausgestaltung der Messkammer 38, um die Messkamera 38 zu kalibrieren. Insbesondere ist erkennbar, dass anstelle des Bohrwerkzeugs 100 ein Kalibriermuster **60** angeordnet sein kann. Das Kalibriermuster 60 kann beispielsweise ein in der Darstellung gemäß Fig. 3 nicht erkennbares Schachbrettmuster sein, wie beispielhaft in Form einer Rohaufnahme in **Fig. 7** gezeigt ist.

Das Kalibriermuster 60 kann ein formstabiles Opalglassubstrat, beispielsweise mit einem geätztem blauen Chrom-Schachbrettmuster, aufweisen. Die Schachbrett-Feldgrößen können 0,4 mm x 0,4 mm, vorzugsweise mit einer Genauigkeit von besser als 0,005 mm betragen.

Vor Verwendung der Messkammer 38 zur Messung des Werkzeugkopfes 102 werden insbesondere die Abstände des Objektivs 44 zu einer Sensorfläche der Messkamera 40 sowie der Sensorfläche zur Linse 48 kalibriert. Darüber hinaus wird die Telezentrizität der Anordnung kalibriert.

Dazu können iterativ Bilder von der Messkamera 40 aufgenommen werden und die Abstände jeweils in Abhängigkeit der aufgenommenen Bilder angepasst werden.

Im Rahmen der Kalibrierung erfolgt darüber hinaus eine Korrektur von Linsenverzerrungen. Insbesondere wird ein tangentiales Brown-Conrady-Verzerrungsmodell zweiter Ordnung auf die Bildkoordinaten angewendet. Das Brown-Conrady-Modell korrigiert sowohl radiale Verzerrungen als auch tangentiale Verzerrungen, die durch physikalische Elemente in einer Linse verursacht werden, die nicht perfekt ausgerichtet ist, sodass ein aufgenommenes Bild des Schachbrettmusters rechteckig und gleichmäßig verteilt erscheint. Parameter für die Verzerrungskorrektur werden aus einem Rohbild des Kalibriermusters 60 geschätzt.

Ferner wird parallel zur Korrektur der Linsenverzerrungen auch das Verhältnis zwischen Bildgröße, insbesondere der Anzahl Pixel, und der tatsächlichen Größe, beispielsweise in mm gemessen, bestimmt.

Je nach den verwendeten Materialien der Messkammer 38 kann sich eine mehr oder weniger ausgeprägte Temperaturabhängigkeit ergeben. Daher kann die Messkammer 38 auch mit einem Temperatursensor ausgestattet sein. Aufgenommene Rohbilder können dann zusätzlich hinsichtlich Temperatureffekten korrigieren.

Neben der Kalibrierung besteht ein weiterer Vorbereitungsschritt im Training der mittels der Rechnereinheit 26 (siehe Fig. 1) ausgebildeten Deep Learning-Einheit.

Dazu erfolgt das Training mittels Aufnahmen von Werkzeugköpfen 102 unterschiedlicher Bohrwerkzeuge 100, insbesondere von voll funktionsfähigen, teilweise abgenutzten und beschädigten, Bohrwerkzeugen 100.

Beispiele solcher Aufnahmen von solchen Werkzeugköpfen 102 sind in Fig. 4 (voll funktionsfähig), Fig. 5 (teilweise abgenutzt) und Fig. 6 (beschädigt) gezeigt.

Insbesondere werden Videoaufnahmen, also Sequenzen von einzelnen Bildern, der jeweiligen Werkzeugköpfe 102 mittels der Messkamera 40 (Fig. 1) aufgenommen. Während der Videoaufnahmen werden die Werkzeugköpfe 102 langsam rotiert, sodass jeweils mindestens eine Rotation vollständig erfasst wird.

Die zugrunde gelegte Klassifikation der Werkzeugköpfe 102 kann dazu durch Expertenratings erfolgen.

Es hat sich gezeigt, dass die Deep Learning - Einheit unter anderem Merkmale aus den Bildern ähnlich einem Hochpassfilter extrahiert.

Im Rahmen eigener Untersuchungen konnten ca. 98 % der auszutauschenden Bohrwerkzeuge 100, d. h. beschädigt oder stark abgenutzt, als auszutauschen korrekt klassifiziert werden. Ca. 96 % der voll funktionsfähigen Bohrwerkzeuge 100 konnten korrekt als voll funktionsfähig klassifiziert werden.

Eine weitere Verbesserung der Klassifikationsgenauigkeit ist denkbar, indem eine Klassifizierung auf Basis von mehr als einem Bild erfolgt, indem eine zusätzliche Reinigung erfolgt und / oder in dem zur Klassifikation wenigstens ein zusätzlicher Arbeitsparameter wie Bohrgeschwindigkeit oder Bohrdauer mit herangezogen werden.

Nach Abschluss der Kalibrierung kann ein eigentlicher Messvorgang stattfinden.

Verfahrensgemäß kann dazu das Bohrwerkzeug 100 in die Messkammer 38 mit seinem Werkzeugkopf 102 voran eingeführt werden.

Nach Erkennen der korrekten Positionierung mithilfe der Lichtschranke 56 nimmt die Messkamera 40 ein Bild des durch die Beleuchtungseinrichtung 54 beleuchteten Werkzeugkopfes 102 auf.

Über die Vorverarbeitungselektronik 58 und der in dieser integrierten Schnittstellenelektronik werden die Daten des aufgenommenen Bildes zur Rechnereinheit 26 übermittelt.

Durch Ausführen des Programmcodes auf der Rechnereinheit 26 werden die Daten des aufgenommenen Bildes zunächst vorverarbeitet, insbesondere werden Bildfehler wie Verzerrungen und dergleichen entsprechend der vorangehend beschriebenen Kalibrierung korrigiert.

Anschließend wird zunächst als eine Eigenschaft des Bohrwerkzeugs 100 sein Durchmesser bestimmt.

Dazu werden die bereinigten Daten des Bildes durch einen Medianfilter gefiltert, um den Einfluss von Rauschen und / oder Staubpartikeln zu mindern.

In einem nächsten Schritt werden Kanten beispielsweise mit einem Canny-Kantenerkennungsalgorithmus ermittelt. Anschließend wird eine größte verbundene Region ermittelt. Ein konvexer Rumpfalgorithmus wird auf die gefilterten Daten angewendet. Mittels eines Rotating Caliper-Algorithmus wird dann der zu bestimmende Durchmesser ermittelt.

Als weitere Eigenschaft des Bohrwerkzeugs 100 wird anschließend ein Verschleißmaß in Form einer Klassifikation in eine der drei zuvor trainierten Klassen bestimmt.

Dazu wird zunächst das bereinigte Bild auf relevante Bereiche zugeschnitten, um Störinformationen, z. B. eine etwaige Abbildung des Trennrohrs 54 im Bild, auszublenden. Es versteht sich, dass auch für das oben beschriebene Training verwendete Bilddaten gleichermaßen zugeschnitten sein können.

Die so erhaltenen Daten werden in die Deep Learning-Einheit eingespeist und dadurch in eine der trainierten Klassen klassifiziert.

Wird als Ergebnis das Bohrwerkzeug 100 als auszutauschen, d. h. als abgenutzt oder beschädigt, klassifiziert, gibt der Bohrbauroboter 10 ein entsprechendes Signal an einen Benutzer aus, beispielsweise mithilfe der Anzeigeeinheit 34 (siehe Fig. 1).

Bei alternativen Ausführungsformen des Bohrbauroboters 10, bei denen der Bohrbauroboter 10 einen Werkzeugwechsler und / oder einen Werkzeugspeicher mit Ersatzbohrwerkzeugen umfasst, kann alternativ oder ergänzend vorgesehen sein, dass der Bohrbauroboter 10 in diesem Fall das Bohrwerkzeug 100 selbsttätig austauscht, sodass das dann zu verwendende Bohrwerkzeug 100 wieder als voll funktionsfähig angesehen werden kann.

Im Falle, dass das Bohrwerkzeug 100 voll funktionsfähig ist, kann der Bohrbauroboter 10 eingerichtet sein, eine Bauaufgabe, hier also eine Bohrung, zu beginnen oder gegebenenfalls fortzusetzen.

## Patentansprüche

1. **Verfahren** zur Nutzung eines Werkzeugs (100), beispielsweise ein Bohrwerkzeug, ein Meißelwerkzeug oder ein Schleifwerkzeug, mit einer mobilen Werkzeugmaschine (10), **dadurch gekennzeichnet, dass** die mobile Werkzeugmaschine (10) wenigstens eine Eigenschaft des Werkzeugs (100) bestimmt.

2. Verfahren nach dem vorhergehenden Anspruch, **dadurch gekennzeichnet, dass** als Eigenschaft ein Werkzeugtyp, eine Größe und / oder ein Verschleißmaß bestimmt wird.

3. Verfahren nach einem der vorhergehenden Ansprüche, **dadurch gekennzeichnet, dass** zur Bestimmung der Eigenschaft ein Bild des Werkzeugs (100) durch eine Bildaufnahmeeinheit (40) aufgenommen wird.

4. Verfahren nach einem der vorhergehenden Ansprüche, **dadurch gekennzeichnet, dass** ein Bild eines Arbeitsabschnitts des Werkzeugs (100) aufgenommen wird.

5. Verfahren einem der vorhergehenden Ansprüche, **dadurch gekennzeichnet, dass** zur Bestimmung der Eigenschaft ein Arbeitsparameter während eines Arbeitsbetriebs der mobilen Werkzeugmaschine (10) gemessen wird.

6. Verfahren nach einem der vorhergehenden Ansprüche, **dadurch gekennzeichnet, dass** zur Bestimmung der Eigenschaft ein trainierbarer Filter verwendet wird.

7. Verfahren nach einem der vorhergehenden Ansprüche, **dadurch gekennzeichnet, dass** der trainierbare Filter mit Daten von voll funktionsfähigen, abgenutzten und beschädigten Werkzeugen (100) trainiert wird.

8. Verfahren nach einem der vorhergehenden Ansprüche, **dadurch gekennzeichnet, dass** die Eigenschaft des Werkzeugs (100) auf einer Baustelle, insbesondere auf einer Hochbau-Baustelle, einer Tiefbau-Baustelle und / oder einer Vorfertigungs-Baustelle, bestimmt wird.

9. **Mobile Werkzeugmaschine** (10), beispielsweise eine Handwerkzeugmaschine oder ein Bauroboter, die eingerichtet ist, ein Werkzeug (100), beispielsweise ein Bohrwerkzeug, ein Meißelwerkzeug oder ein Schleifwerkzeug, aufzunehmen, **dadurch gekennzeichnet, dass** die mobile Werkzeugmaschine (10) eingerichtet ist, wenigstens eine Eigenschaft des in ihr aufgenommenen Werkzeugs (100) zu bestimmen.

10. Mobile Werkzeugmaschine nach dem vorhergehenden Anspruch, **dadurch gekennzeichnet, dass** die mobile Werkzeugmaschine (10) eingerichtet ist, in Abhängigkeit der bestimmten Eigenschaft ein Signal an einen Benutzer auszugeben.

11. Mobile Werkzeugmaschine nach einem der Ansprüche 9 bis 10, **dadurch gekennzeichnet, dass** die mobile Werkzeugmaschine (10) wenigstens eine Bildaufnahmeeinheit (40) aufweist.

12. Mobile Werkzeugmaschine nach einem der Ansprüche 9 bis 11, **dadurch gekennzeichnet, dass** die mobile Werkzeugmaschine (10) eine Messkammer (38) aufweist, in die das Werkzeug (100) zur Bestimmung der Eigenschaft zumindest teilweise aufnehmbar ist.

13. Mobile Werkzeugmaschine nach einem der Ansprüche 9 bis 12, **dadurch gekennzeichnet, dass** die mobile Werkzeugmaschine (10) eingerichtet ist, je nach detektiertem Typ und / oder je nach detektiertem Zustand einen Betriebsparameter, beispielsweise eine Drehzahl und / oder eine Schlagenergie, selbsttätig einzustellen.

14. Mobile Werkzeugmaschine nach einem der Ansprüche 9 bis 13, **dadurch gekennzeichnet, dass** die mobile Werkzeugmaschine (10) eine Werkzeugreinigungsvorrichtung aufweist.

15. Mobile Werkzeugmaschine nach einem der Ansprüche 9 bis 14, **dadurch gekennzeichnet, dass** die mobile Werkzeugmaschine ein Bauroboter, insbesondere ein Bohrbauroboter (10), ist.
